(19) **Europäisches Patentamt / European Patent Office / Office européen des brevets**

(11) **EP 1 581 991 B1**

(12) **FASCICULE DE BREVET EUROPEEN**

(45) Date de publication et mention de la délivrance du brevet:
**13.03.2013 Bulletin 2013/11**

(21) Numéro de dépôt: **04700469.2**

(22) Date de dépôt: **07.01.2004**

(51) Int Cl.:
*H02K 26/00* (2006.01)   *H01F 7/14* (2006.01)

(86) Numéro de dépôt international:
**PCT/FR2004/050004**

(87) Numéro de publication internationale:
**WO 2004/066476 (05.08.2004 Gazette 2004/32)**

(54) **ACTIONNEUR ROTATIF BISTABLE MONOPHASE HYBRIDE**

HYBRIDER BISTABILER DREHBARER EINPHASIGER AKTUATOR

HYBRID SINGLE-PHASE BISTABLE ROTARY ACTUATOR

(84) Etats contractants désignés:
**CH DE FR GB IT LI**

(30) Priorité: **07.01.2003 FR 0300113**

(43) Date de publication de la demande:
**05.10.2005 Bulletin 2005/40**

(73) Titulaire: **Moving Magnet Technologies (S.A.) 25000 Besançon (FR)**

(72) Inventeurs:
• **LOUSSERT, Guillaume F-25000 BESANÇON (FR)**
• **BIWERSI, Stéphane F-25000 BESANÇON (FR)**
• **GANDEL, Pierre F-25660 MONTFAUCON (FR)**

(74) Mandataire: **Breesé, Pierre Fidal Innovation 32, place Ronde 92035 Paris la Defense cedex (FR)**

(56) Documents cités:
**US-A- 3 694 782       US-A- 6 147 427**
**US-A1- 2002 113 502   US-B1- 6 313 553**
**US-B1- 6 443 635**

**Description**

Cette invention concerne les actionneurs électromagnétiques monophasés bistables, rotatifs ou linéaires, c'est-à-dire les actionneurs monophasés (pilotés par un seul bobinage dans le cas d'une commande bipolaire, ou par un bobinage fractionné en plusieurs bobines recevant la même commande bipolaire, ou encore, dans le cas des commandes unipolaires, de deux bobinages inversés) capables de prendre deux états distincts de position stables, suite à deux signaux de commandes électriques différenciées, et de garder ces 2 états stables hors d'un mode de commande électrique, tel que décrit dans le brevet FR 2786042.

A titre d'exemple uniquement, l'invention concerne par exemple les actionneurs électriques monophasés qui sous l'action d'une impulsion électrique positive dans leur bobinage vont passer d'une position 1 (début de course) à une position 2 (fin de course), et qui sous l'action d'une impulsion électrique négative dans leur bobinage vont passer de la position 2 à la position 1, en étant capable de garder indifféremment la position 1 ou la position 2 sans courant.

L'un des objectifs de l'invention est de proposer un actionneur monophasé bistable possédant les propriétés de bi-stabilité évoquées ci-dessus, mais qui par rapport à l'art antérieur possède les avantages suivants :

- un fort couple/force de maintien en positions stables sans courant, dont le niveau peut être modulé (augmenté ou diminué) par l'action du courant dans le ou les bobinages de l'actionneur
- un fort couple/force de décollage permettant à l'actionneur de sortir de chacune de ces positions stables avec une puissance électrique limitée appliquée au bobinage.
- la possibilité de produire un fort couple/force dû au courant sur une large course angulaire ou linéaire, contre l'action d'une charge extérieure, tout en étant piloté par un circuit électrique de commande de type monophasé.

Cette invention trouvera tout particulièrement un grand intérêt pour actionner des vannes d'admission ou de re-circulation de fluides dans le domaine automobile et pour maintenir celles-ci dans des positions prédéterminées, sans courant, malgré la réaction de ces fluides.

Il existe déjà de nombreux actionneurs bistables linéaires ou rotatifs qui permettent d'assurer la fonction de collage en fin de course de différentes manières.

Des solutions de type solénoïdes permettent de l'effectuer avec un courant électrique, certes faible, mais qui nécessite une alimentation électrique continue pouvant s'avérer problématique en cas de dysfonctionnement du système de contrôle électronique. D'autres types de solutions telles que les latching-solenoids possèdent des aimants de verrouillage local en bout de course, mais ces solutions présentent le désavantage de ne développer que très peu de couple au décollage et sur toute la course.

Des solutions utilisant des moteurs permettent d'obtenir des couples élevés sur la course en assurant la fonction de maintien grâce à des éléments mécaniques de verrouillage en fin de course. Si ces solutions sont efficaces, elles présentent l'inconvénient de nécessiter au moins 2 phases électriques, et la présence d'éléments mécaniques à rajouter, ce qui augmente donc le coût global de l'actionneur.

Des solutions permettant d'obtenir un couple constant sur toute la course sont par exemple décrites dans le brevet français FR2688105 et FR2786042, mais ne permettent pas de verrouiller efficacement l'actionneur dans deux positions stables en bout de course sans courant.

Le brevet américain N° US 2002/113502 décrit un dispositif électromagnétique dans lequel l'entrefer est constant. Dans ce brevet, la structure du dispositif réside dans le dépassement d'une « projection » d'aimant du rotor classique, et cette « projection » vient se coller sur les stators en bout de course. Dans cette réalisation, on n'utilise pas le déplacement d'une partie ferromagnétique avec le rotor et le circuit magnétique n'est pas à entrefer et réluctance variable.

Le brevet US 6443635 décrit un dispositif électromagnétique dans lequel il n'y a aucune fermeture de flux entre les butées mécaniques et la partie statorique. Il s'agit en effet uniquement de butées mécaniques et l'invention objet de ce brevet utilise uniquement la loi de couple normale du moteur. Dans cette réalisation, on utilise nullement une fermeture du circuit magnétique par une partie ferromagnétique mobile située sur le rotor.

Le brevet US 6147427 décrit un dispositif électromagnétique dont le rotor ne comporte pas de partie aimantée.

Le but de l'invention est donc de créer un actionneur combinant dans le même circuit magnétique des qualités de couple/force de verrouillage sans courant en fin de course, de couple/force de décollage avec courant et de couple/force continu avec courant.

A cet effet, l'actionneur selon l'invention présente une partie statorique fixe, appelée communément stator, comportant le ou les bobinages, et une partie mobile, appelée communément rotor, définissant entre elles trois types d'entrefers :

- un entrefer principal d'épaisseur E sensiblement constante tout au long de la course de l'actionneur, dans lequel se déplace un aimant permanent créant une variation de flux sensiblement linéaire dans le noyau statorique de la bobine.
- deux entrefers secondaires d'épaisseurs A et B variables de façon complémentaires avec la course de l'actionneur.

Le couple/force global d'un tel actionneur suivant l'invention, en toutes positions, peut s'écrire :

$$C_{total} = C_{ni}^2 + C_{ni} + C_o$$

où :

- $C_{ni}^2$ est le couple/force dû principalement à l'effet de la réluctance variable des entrefers A et B et uniquement proportionnel au carré des Ampère-tours appliqués au bobinage (donc non polarisé), et qui prend des valeurs très importantes lorsque A ou B sont petits.

- $C_{ni}$ est le couple/force issu de l'influence mutuelle bobine/aimant, proportionnel à la variation de flux engendré dans le noyau de bobine lors d'un mouvement du rotor, et proportionnel aux Ampère-tours appliqués au bobinage (donc polarisé). On voit que le couple de décollage, qui a pour origine la grande variation du flux dû à l'aimant dans la bobine à l'ouverture de l'entrefer A ou B, sera très important du fait de cette grande variation à l'ouverture de A ou B.

- Co est le couple/force dû à la circulation du flux de l'aimant seul (aussi appelé magnétostatique), lorsque le ou les bobinages ne sont pas alimentés. Ce couple prend des valeurs importantes lorsque A ou B sont petits car ces positions vont correspondre à un point de travail élevé pour l'aimant.

Selon cette loi et les caractéristiques géométriques et physiques de l'actionneur selon l'invention, on voit qu'il est possible de calculer indépendamment chacun des termes $C_0$, $C_{ni}$, $C_{ni}^2$ qui correspondent à trois caractéristiques différentes de l'actionneur de manière à favoriser soit le couple/force au décollage, soit le couple de verrouillage sans courant, soit le couple continu tout au long de la course.

L'invention concerne selon son acception la plus générale un actionneur électromagnétique monophasé hybride Selon la revendication principale,

Les modes de réalisation avantageuses sont exposé dans les revendications dépendantes.

Pour plus de clarté, la description qui suit se réfère aux dessins qui l'accompagnent dans lesquels :

Les figures 1 et 2 montrent l'actionneur dans sa variante rotative préférée, en vue coupée, utilisant un aimant tuile.
La figure 3 montre l'évolution du couple total généré par l'actionneur avec et sans courant sur toute la course utile.
La figure 4 montre l'évolution du couple de décollage en fonction du potentiel magnétique (Ampère-tours) utilisé dans la bobine.

La figure 5 montre, suivant une vue en trois-quart, une deuxième variante rotative de l'actionneur utilisant un aimant disque.
La figure 6 montre, suivant une vue en trois-quart, une variante linéaire de l'actionneur.
La figure 7 montre, suivant une vue en trois-quart, une variante de l'actionneur rotatif de la figure 1 où les positions respectives du rotor et du stator ont été inversées (variante à rotor extérieur).
La figure 8 montre, suivant une vue en coupe, une autre variante d'actionneur rotatif utilisant un aimant plat intégré dans le rotor.
La figure 9 montre, suivant une vue de face, une variante symétrique de l'actionneur utilisant deux aimants tuiles.

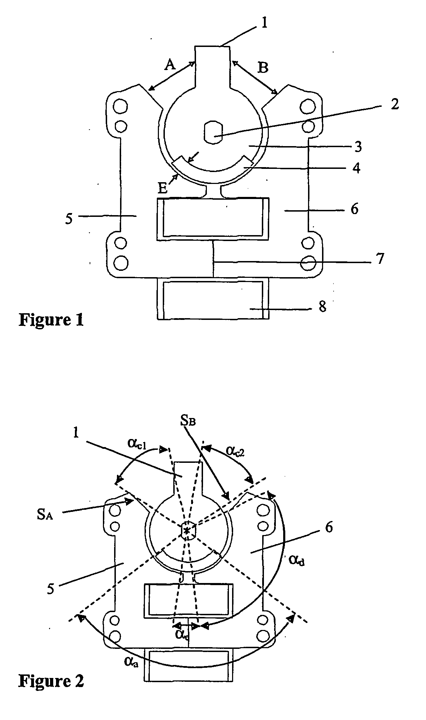

La figure 1 présente la variante préférée de l'actionneur revendiqué, représenté en milieu de course. Un rotor 1, mobile autour d'un axe de rotation 2, est constitué d'une partie ferromagnétique 3 et d'un aimant 4 d'épaisseur L prenant une forme de tuile. Les deux parties statoriques 5 et 6 faites de matériau ferromagnétique, sont en contact au niveau de la surface 7. Cette séparation des stators permet ainsi l'insertion d'une bobine unique 8. Cet ensemble présente deux entrefers secondaires variables (A) et (B) lorsque le rotor se déplace entre les deux positions de fin de course délimitées par les stators 5 et 6. Un troisième entrefer, l'entrefer principal, noté E reste constant durant le déplacement du rotor. L'aimant tuile 4 utilisé dans la structure sera préférentiellement aimanté suivant son rayon, mais une aimantation suivant son diamètre peut aussi être envisagée, selon la caractéristique de couple recherchée.

Le principe de fonctionnement simplifié, à partir de la position de milieu de course représentée en figure 1 est le suivant :

- Sous l'action d'une alimentation en courant de la bobine 8 dans un sens positif, un couple positif au niveau de l'aimant 4 va produire un déplacement en sens horaire du rotor 1, et l'entrefer B va donc se fermer.
- Sous l'action d'une alimentation en courant de la bobine 8 dans un sens négatif, un couple négatif au niveau de l'aimant 4 va produire un déplacement en sens anti-horaire du rotor 1, l'entrefer A va donc se fermer.
- Arrivé sur l'une ou l'autre de ces positions de fin de course, le courant dans la bobine 8 peut être relâché, le rotor 1 restera verrouillé sans courant par la circulation du flux dû à l'aimant 4 dans l'entrefer A (respectivement B).
- Ce couple de verrouillage sans courant peut-être modulé par la circulation d'un flux dû aux Ampère-tours (crée par le bobinage 8) dans l'entrefer A ou B. Si le flux dû au Ampère-tours s'ajoute au flux dû à l'aimant dans l'entrefer A ou B, le couple de verrouillage augmente. Si le flux dû au Ampère-tours se retranche au flux dû à l'aimant dans l'entrefer A ou B, le couple de verrouillage diminue. Dans ce dernier cas lorsque le couple de verrouillage va passer en dessous de la valeur du couple moteur produit par l'aimant 4, le rotor pourra décoller de sa position fin de course.

La structure présentée en figure 1 montre la variante préférée de l'actionneur, mais elle n'est nullement limitative et le principe même de l'invention peut être décliné suivant plusieurs autres variantes que nous présenterons par la suite mais qui ne forment pas une liste exhaustive.

La figure 2 présente le même actionneur qu'en figure 1, représenté en milieu de course, mais définit les paramètres angulaires de l'actionneur. $\alpha a$ est l'angle d'ouverture de l'aimant, $\alpha e$ l'angle séparant les deux pôles statoriques définissant avec le rotor 1 le ou les entrefers constants, $\alpha d$ est l'ouverture angulaire totale d'un pôle statorique définissant avec le rotor 1 le ou les entrefers constants.

La course limite $\alpha c$ qu'il est possible d'atteindre avec l'actionneur se définit d'après ces paramètres comme suit :

$$\alpha c = \alpha c1 + \alpha c2$$

$$\alpha d > \alpha c$$

$$\alpha a > \alpha d + \alpha e$$

$$\text{donc } \alpha a > \alpha c + \alpha e$$

$\alpha e$ doit être le plus faible possible afin d'optimiser $\alpha a$ pour une course donnée. Il ne doit cependant pas être trop faible pour ne pas créer un court-circuit magnétique défavorable entre les deux pôles statoriques. Cet angle sera donc ajusté suivant le désir de l'utilisateur. De manière préférentielle, la course maximale de l'actionneur est limitée à 130° environ.

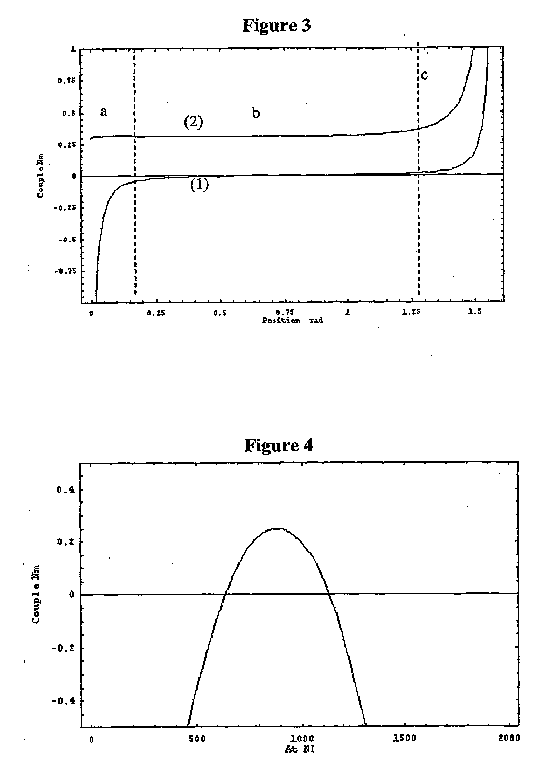

La figure 3 montre, à travers un exemple de réalisation d'actionneur rotatif sur 90°, la forme du couple obtenu avec l'actionneur présenté en figures 1 et 2. Les courbes (1) et (2) font référence au couple obtenu, respectivement, sans alimentation de la bobine, et avec alimentation de la bobine. On peut découper les courbes en trois zones distinctes :

(a) : Couple en début de course.
(b) : Couple sur la plus grande partie de la course.
(c) : Couple en fin de course.

La zone (a) présente l'efficacité de la structure en début de course. La courbe (1), actionneur sans alimentation électrique, présente un fort couple négatif correspondant à l'effort de maintien stable sans courant. On note que ce couple/force de position stable peut être modifié suivant les sections de passage de flux réalisées au niveau des entrefers A et B, appelées SA et $S_B$. En réalisant, par exemple, des sections de passage plus petites, la saturation magnétique des stators favorise la diminution du couple de maintien sans courant.

En alimentant la bobine de l'actionneur suivant un potentiel magnétique optimum, on passe alors sur la courbe (2) où le couple obtenu est positif dès le début de la course, on sort alors de la position stable. Ceci est rendu possible par la grande variation du flux dû à l'aimant dans la bobine à l'ouverture du rotor. Le fort gradient de flux associé à un courant dans la bobine crée un fort couple qui a tendance à chasser le rotor de sa position stable. Pour certaines valeurs du potentiel magnétique de la bobine, cette valeur surpasse la somme des autres composantes du couple qui sont le couple d'origine réluctant et le couple d'origine magnétostatique, qui ont tendance à maintenir cette position puisque correspondant à une énergie magnétique potentielle minimum. Ces valeurs dépendent des caractéristiques géométriques et physiques de l'actionneur qui modélisent la forme de l'équation du couple :

$$C = \alpha \; C_{ni}^2 + \beta \; C_{ni} + \gamma \; . \; C_0$$

à travers les coefficients $\alpha$, $\beta$ et y.

La zone (b) est celle où le couple créé n'est plus influencé par les entrefers A et B devenus trop importants par rapport à l'entrefer principal E. Le couple sans courant, courbe (1), est alors proche de zéro, puisque le flux de l'aimant circule de la même manière quelle que soit la position prise par le rotor. Avec courant, courbe (2), le couple est alors sensiblement égal à celui disponible pour l'actionneur décrit dans le brevet français FR2786042. Celui-ci est sensiblement constant sur la course puisque la variation du flux de l'aimant dans la bobine, qui est à l'origine de la majeure partie du couple sur cette zone, est quasi-linéaire. En fonction de l'encastrement de l'aimant dans le rotor, une composante réluctante plus ou moins importante pourra modifier sensiblement la forme du couple.

Dans la zone (c), pour laquelle se referment les entrefers A ou B, le couple sans courant, courbe (1), redevient important puisque le flux magnétique produit par l'aimant trouve un chemin plus favorable en se refermant par l'entrefer A ou B. Lorsque l'un de ces deux entrefers devient très faible, on se retrouve dans une position stable sans courant avec un fort couple de maintien. Avec courant, courbe (2), le couple dû à la variation du flux de l'aimant dans la bobine s'ajoute au couple reluctant $C_{ni}^2$ pour favoriser un couple conséquent en fin de course.

La figure 4 illustre, sur un exemple, la variation du couple de décollage en fonction du nombre d'Ampère-tours. On retrouve, à travers la courbe montrée, la forme de l'équation

$$C = \alpha \; C_{ni}^2 + \; \beta \; C_{ni} \; + \; \gamma \; . \; C_0$$

avec d'une part un optimum, et d'autre part un intervalle de valeurs pour laquelle le couple total généré est positif. Si l'on sort de cet intervalle, le décollage du rotor n'est plus possible car la valeur du potentiel magnétique dans la bobine n'est plus adaptée aux caractéristiques de l'actionneur.

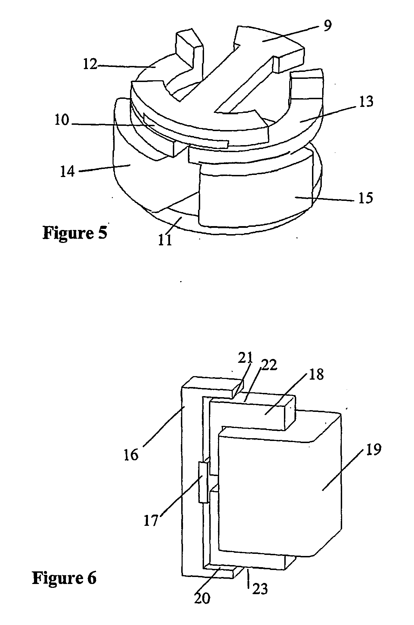

La figure 5 présente une variante rotative de l'actionneur selon l'invention. La structure présente un rotor 9, dans lequel un aimant disque à aimantation 10 axiale est placé, qui se déplace au-dessus d'une partie statorique 11. La partie statorique comprend deux pôles 12 et 13 sur lesquels sont placées deux bobines 14 et 15. Les avantages de cette structure sont, entre autres, l'utilisation d'un aimant disque dont la polarisation axiale est facile à réaliser, et l'encombrement réduit permettant d'insérer plus de cuivre sur le stator.

La figure 6 présente une version linéaire du principe d'actionneur. Une pièce mobile 16 (équivalente au rotor des variantes rotatives), dans lequel est inséré un aimant plat 17, se déplace au-dessus d'une partie statorique 18 pouvant être séparée en deux parties distinctes pour permettre l'insertion de la bobine 19. En positions extrêmes, bobine non alimentée, les surfaces 20 ou 21 sont en contact avec les surfaces 22 ou 23, respectivement, réalisant l'état énergétique le plus favorable duquel ne souhaite pas sortir l'aimant. Cette structure utilise le circuit de base présentée dans le brevet EP00974185B1, et tout comme celui-ci, elle peut se présenter sous une forme axisymétrique autour de l'axe de déplacement du rotor.

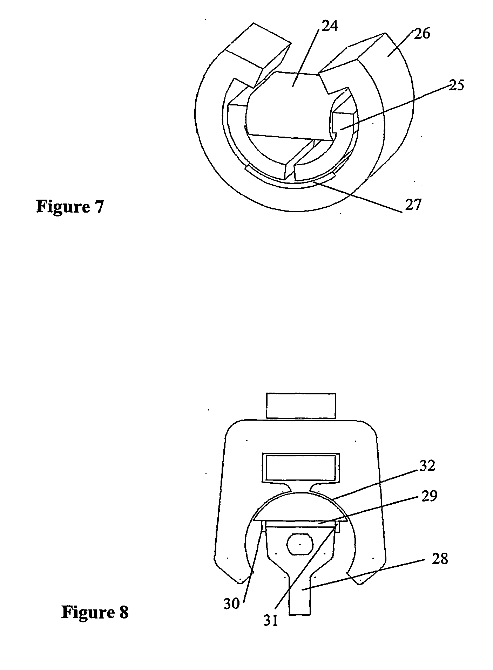

La figure 7 présente une variante rotative inversée de l'actionneur. Dans celle-ci, le rotor tourne autour du stator. La bobine 24 est insérée sur la partie statorique 25. Le rotor 26 comprend un aimant 27 dont l'aimantation peut être aussi bien radiale que diamétrale.

La figure 8 présente une variante de l'actionneur de la figure 1. Le rotor 28 comprend un aimant 29 plat dont l'aimantation suivant son épaisseur est facile à réaliser. Cette réalisation nécessite une découpe particulière du rotor 28. Celui-ci présentera avantageusement deux isthmes saturables 30 et 31 permettant la réalisation en une seule pièce du rotor 28. L'ajout de ces isthmes n'a pour seule conséquence que de diminuer le couple magnétostatique au collage, puisqu'une partie du flux de l'aimant se boucle par ceux-ci. Cette réalisation présente l'avantage de ne garder qu'un faible entrefer constant 32, tout en permettant la présence de l'aimant plat 29.

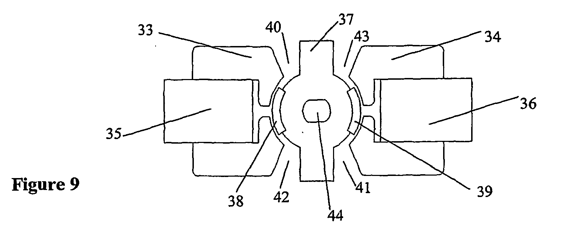

La figure 9 présente une variante symétrique de l'actionneur de la figure 1. Les deux parties statoriques 33 et 34, sur lesquelles sont installées les bobines 35 et 36 respectivement, sont de part et d'autre de la partie mobile 37 sur laquelle sont installés les aimants 38 et 39. Les deux circuits magnétiques ainsi formés de part et d'autre du rotor peuvent être indépendants l'un de l'autre si la polarité des aimants est entrante ou sortante pour les deux aimants. On peut cependant créer un couplage magnétique entre les deux circuits magnétiques en alternant les polarités. Dans les deux positions extrêmes prises par le rotor 37, les entrefers 40 et 41, ou 42 et 43, se ferment pour créer, sans alimentation des bobines, une configuration énergétique optimale pour l'aimant qui crée ainsi une position stable sans alimentation électrique. Cette variante permet grâce à la symétrie du circuit magnétique, de supprimer les efforts radiaux pouvant s'exercer sur l'axe 44. Elle permet, de plus, de par ses deux surfaces actives en position stable, de générer plus de couple dans ces positions et peut être voué à des applications nécessitant des couples importants.

De même des variantes dissymétriques dans leurs états stables (verrouillage privilégié dans l'une ou l'autre des 2 positions de fin de course) constituent toujours un actionneur bi-stable selon l'invention, y compris jusqu'à la disparition d'un des deux états stables de verrouillage sans courant.

## Revendications

1. Actionneur électromagnétique monophasé hybride de course utile limitée C dans laquelle le couple/force sans courant est proche de zéro sur la plus grande partie de la course,

   comportant une partie statorique constituée d'au moins 2N pôles, N étant un nombre entier, excité par au moins une bobine d'excitation, l'actionneur comprenant en outre un composant mobile (1,9,26,28) constitué d'une partie ferromagnétique (3,16) et comprenant au moins N parties aimantées (4,17,29), le stator et ledit composant mobile définissant entre eux un entrefer principal d'épaisseur E sensiblement constant tout au long de la course c **caractérisé en ce que** le composant mobile (1,9,26,28) présente au moins une position stable de verrouillage sans courant en fin de course, et **en ce que** le stator et ledit composant mobile définissent entre eux au moins un entrefer secondaire d'épaisseur variable lorsque le composant mobile se déplace entre les positions de fin de course.

2. Actionneur électromagnétique monophasé hybride selon la revendication 1 **caractérisé en ce que** la partie mobile décrit un mouvement rotatif.

3. Actionneur électromagnétique monophasé hybride selon la revendication 1 **caractérisé en ce que** la partie mobile décrit un mouvement linéaire.

4. Actionneur électromagnétique monophasé hybride selon les revendications 1, 2 ou 3 **caractérisé en ce que** la partie mobile (19,26,23) présente deux états stables de verrouillage sans courant a chacun des bouts de la courses et deux entrefers secondaires d'épaisseurs variables en fonction de la course.

5. Actionneur électromagnétique monophasé hybride selon la revendication 1 ou 2 **caractérisé en ce que** la partie aimantée (4,17,29), mobile avec le rotor, est composée d'une ou plusieurs tuiles aimantées radialement.

6. Actionneur électromagnétique monophasé hybride selon la revendication 1 ou 2 **caractérisé en ce que** la partie aimantée (4,17,29), mobile avec le rotor, est composée d'une ou plusieurs tuiles aimantées diamétralement.

7. Actionneur électromagnétique monophasé hybride selon la revendication 1 ou 2 **caractérisé en ce que** la partie aimantée (4,17,23), mobile avec le rotor, est composée d'une ou plusieurs aimants en forme de disque.

**Claims**

1. A hybrid single-phase electromagnetic actuator with a limited working stroke (C), wherein the current free torque/force is close to zero on most of the stroke, comprising a stator portion consisting of at least 2N poles, with N being an integer, excited by at least one excitation coil, the actuator further comprising a mobile component (1, 9, 26, 28) consisting of a ferromagnetic portion (3, 16) and comprising at least N magnetized portions (4, 17, 29), with the stator and said mobile component defining therebetween one main air gap of substantially constant thickness E throughout the stroke (c), **characterized in that** the mobile component (1, 9, 26, 28) has at least one stable current-free locking position at the end of the stroke, and **in that** the stator and said mobile component define therebetween at least one secondary air gap of thickness varying when the mobile component moves between the end of stroke positions.

2. A hybrid single-phase electromagnetic actuator according to claim 1, **characterized in that** the mobile portion performs a rotary motion.

3. A hybrid single-phase electromagnetic actuator according to claim 1, **characterized in that** the mobile portion performs a linear motion.

4. A hybrid single-phase electromagnetic actuator according to claims 1, 2 or 3, **characterized in that** the mobile portion (1, 9, 26, 28) has two current-free locking stable states at each one of the ends of the stroke C and two secondary air gaps of thickness varying according to the stroke.

5. A hybrid single-phase electromagnetic actuator according to claim 1 or 2, **characterized in that** the magnetized area (4, 17, 29), which moves with the rotor, is composed of one or more radially magnetized tile(s).

6. A hybrid single-phase electromagnetic actuator according to claim 1 or 2, **characterized in that** the magnetized area (4, 17, 29), which moves with the rotor, is composed of one or more diametrally magnetized tile(s).

7. A hybrid single-phase electromagnetic actuator according to claim 1 or 2, **characterized in that** the magnetized area (4, 17, 29), which moves with the rotor, is composed of one or more disk-shaped magnetized tile(s).

**Patentansprüche**

1. Einphasiger, elektromagnetischer Hybridschalter des begrenzten Betätigungslaufs C, bei dem das Moment / die Kraft ohne Strom auf dem größten Teil des Laufs nahezu Null beträgt, der einen Statorteil umfasst, der aus wenigstens 2N Polen gebildet wird, wobei N eine ganze Zahl ist, die durch wenigstens eine Erregerspule erregt wird, wobei der Schalter darüber hinaus ein mobiles Bauteil (1, 9, 26, 28) umfasst, das durch einen ferromagnetischen Teil (3, 16) gebildet wird, und wenigstens N magnetisierte Teile (4, 17, 29) umfasst, wobei der Stator und die genannte mobile Komponente untereinander einen Hauptluftspalt mit einer Dicke E definieren, die entlang dem Lauf C deutlich konstant ist, **dadurch gekennzeichnet, dass** die mobile Komponente (1, 9, 26, 28) wenigstens eine stabile Verriegelungsposition ohne Strom in der Endstellung aufweist und dass der Stator und die genannte mobile Komponente untereinander wenigstens einen sekundären Luftspalt in variabler Dicke definieren, wenn die mobile Komponente sich zwischen den Positionen der Endstellung verschiebt.

2. Einphasiger, elektromagnetischer Hybridschalter gemäß Anspruch 1, **dadurch gekennzeichnet, dass** der mobile Teil eine rotierende Bewegung beschreibt.

3. Einphasiger, elektromagnetischer Hybridschalter gemäß Anspruch 1, **dadurch gekennzeichnet, dass** der mobile Teil eine lineare Bewegung beschreibt.

4. Einphasiger, elektromagnetischer Hybridschalter gemäß den Ansprüchen 1, 2 oder 3, **dadurch gekennzeichnet, dass** der mobile Teil (1, 9, 26, 28) zwei stabile Verriegelungszustände ohne Strom an jedem Ende des Laufs C und zwei sekundäre Luftspalte mit in Abhängigkeit des Laufs variablen Dikken aufweist.

5. Einphasiger, elektromagnetischer Hybridschalter gemäß Anspruch 1 oder 2, **dadurch gekennzeichnet, dass** der magnetisierte Teil (4, 17, 29), der mit dem Rotor mobil ist, aus einem oder mehreren Ziegeln gebildet wird, die radial magnetisiert sind.

6. Einphasiger, elektromagnetischer Hybridschalter gemäß Anspruch 1 oder 2, **dadurch gekennzeichnet, dass** der magnetisierte Teile (4, 17, 29), der mit dem Rotor mobil ist, aus einem oder mehreren Ziegeln gebildet wird, die diametral magnetisiert sind.

7. Einphasiger, elektromagnetischer Hybridschalter gemäß Anspruch 1 oder 2, **dadurch gekennzeichnet, dass** der magnetisierte Teil (4, 17, 29), der mit dem Rotor mobil ist, aus einem oder mehreren Magneten in Scheibenform gebildet wird.

**Figure 1**

**Figure 2**

## Figure 3

## Figure 4

Figure 5

Figure 6

**Figure 7**

**Figure 8**

Figure 9

EP 1 581 991 B1

## RÉFÉRENCES CITÉES DANS LA DESCRIPTION

### Documents brevets cités dans la description

- FR 2786042
- FR 2688105
- US 2002113502 A
- US 6443635 B
- US 6147427 A
- EP 00974185 B1